# EUROPEAN PATENT APPLICATION

(11) **EP 3 370 433 A1**
(43) Date of publication of application: **05.09.2018**
(21) Application number: 16860057.5
(22) Date of filing: 03.06.2016
(51) Int. Cl.: H04R 1/10, A63F 13/332

(54) **COMMAND-RESPONSIVE VIBRATION BLUETOOTH HEADSET AND SMART DEVICE GAME HAVING APPLIED SAME**

(30) Priority: 27.10.2015 KR 20150149548
(71) Applicant: Mobifren Co., Ltd, Gumi-si, Gyeongsangbuk-do 39445 (KR)
(72) Inventor: HEO, Ju Won, Gumi-si Gyeongsangbuk-do 39445 (KR)
(74) Representative: Müller Verweyen
(86) International application number: PCT/KR2016/005898
(87) International publication number: WO 2017/073873

(57) **Abstract**

The present invention relates to a command-responsive vibration Bluetooth headset and a smart device game having applied same. The Bluetooth headset (20), which is linked to a smart device (10) by means of a Bluetooth communication module and outputs voices, has a vibration module installed in a main body of the Bluetooth headset (20), wherein the vibration module is for generating vibration if a vibration command (40) signal is received from a program being executed in the smart device (10). Therefore, in response to a vibration command transmitted from a program such as games when a particular action is played during the execution of the program, vibration can be generated by means of the Bluetooth headset.

## Description

### [Technical Field]

The present invention relates to a command-responsive vibration Bluetooth headset and a smart device game employing the same, and more particularly, to a command-responsive vibration Bluetooth headset and a smart device game employing the same, in which the Bluetooth headset linked to the smart device through a Bluetooth communication module generates vibration in response to a vibration command transmitted from a game program executed in the smart device. Accordingly, when a particular action is played during the execution of the program, a user may sense the vibration as well as a voice through the Bluetooth headset, and auditory and tactile senses are stimulated.

### [Background Art]

In general, a headset is a head-mounted device on which a headphone and a microphone are installed together so as to input and output a voice.

Since a typical wired headset includes a headphone terminal and a microphone terminal, the headset can be connected to a source terminal such as a PC and a smart device for use. Recently, a wireless headset to which wireless communication technology such as Bluetooth is applied has been developed to eliminate the inconvenience due to the cable connection with the source terminal, so that the headset is provided in a more convenient form, thereby remarkably improving the usability.

Hereinafter, a schematic configuration of a Bluetooth headset disclosed in Korean Patent Registration No. 10-1498087, which is publicly known as an example of a headset to which Bluetooth technology widely known in the art is applied, will be described.

The above Bluetooth headset includes: a body which is able to be worn on a user body and has an earphone coupling portion; a Bluetooth module provided in the body to wirelessly receive an audio signal from a mobile terminal; an earphone connected to the body via a cable, and having a unit which is worn on an ear of a user and detachably coupled to the earphone coupling portion; and a controller for outputting sound according to the audio signal.

The Bluetooth headset of the related art including the patent registration cited as an example generally has a configuration that a voice signal generated in the source terminal is transmitted to the Bluetooth headset through a Bluetooth communication module to output the voice signal from the earphone, so that the user can listen to the voice signal.

However, since programs of various mobile games and the like are frequently used when persons are in public transportation service or even in indoor and outdoor public places due to the generalization of smart devices, the voice, which is outputted based on a basic voice output function of the headset, is not effectively transmitted due to the interference of ambient noise and the like, resulting in great inconvenience in use.

In recognition of such a problem, recently, a vibration headset having a vibration function has been developed and provided. For example, a configuration of a USB vibration headset equipped with a vibration element disclosed in Korean Utility Model Registration No. 20-0295673 will be described.

A headset for outputting an acoustic signal, which is applied from an outside through an input terminal, to a speaker and outputting a user voice signal, which is applied from a microphone, to the outside through an output terminal includes: a vibration device installed on a periphery of the speaker and having a vibration element and a diaphragm to generate vibration according to the acoustic signal applied from the input terminal; a USB terminal connected to a USB port of a computer; and an adjustment device for supplying electric power of the computer from the USB terminal to the vibration element.

### [Disclosure]

### [Technical Problem]

The Bluetooth headset disclosed in Korean Patent Registration No. 10-1498087, to which the above-described the related art is applied, adopts a wireless headset form which can relieve the inconvenience in use incurred in an existing wired headset due to the cable connection, so that the usability is remarkably improved.

However, the Bluetooth headset has a problem in that the Bluetooth headset transmits information (voice signal) depending on only the auditory sense of a user by using only a function of inputting and outputting the voice signal as in the headset of the related art, and is vulnerable to the interference of ambient noise and the like as described above.

Moreover, although the USB vibration headset equipped with the vibration element disclosed in Korean Utility Model Registration No. 20-0295673 includes the diaphragm for generating the vibration, there is a technical limitation in that the wired connection has to be set through a USB, and the diaphragm simply generates the vibration according to a bass signal of an output voice, so that it is effective in generating the vibration only when it is used for reproducing music in which bass is emphasized like a typical woofer speaker, resulting in an extremely limited range of application.

### [Technical Solution]

To solve the problems described above, the present invention provides a Bluetooth headset (20) linked to a smart device (10) through a Bluetooth communication module to output a voice, and including a vibration module installed in a main body of the Bluetooth headset (20), wherein the vibration module generates vibration if a signal of a vibration command (40) is received from a program executed in the smart device (10).

In addition, the vibration command (40) may be transmitted to the Bluetooth headset (20) as a signal according to a vibration pattern (50) including an array of commands of vibration generation (p) and vibration pause (s) and defined in a program source (30) to operate the Bluetooth headset (20) in a vibration generation state or a vibration pause state.

In addition, at least one vibration pattern (50) may be created by variably defining a multiple of a minimum unit time for executing the commands of the vibration generation (p) and the vibration pause (s). Accordingly, in response to the vibration command transmitted from the program such as games when a particular action is played during the execution of the program, the vibration can be generated from the Bluetooth headset.

### [Advantageous Effects]

The present invention provides a Bluetooth headset for generating vibration by receiving a vibration command transmitted from a game program, which is executed in a PC or a smart device, through a Bluetooth communication module, and a smart device game employing the Bluetooth headset. Accordingly, auditory and tactile senses of a user are simultaneously stimulated when a particular action is played during the execution of the game, so that it is very effective in enabling a more realistic play and inducing interest of the user.

In addition, various types of vibration patterns can be defined and used according to the configuration of the program when the vibration command is transmitted, so that it is possible to realize a vibration effect through the Bluetooth headset more effectively by variably creating vibration according to a particular situation. Therefore, it is expected to be widely used not only in game programs but also in various fields.

### [Description of Drawings]

FIG. 1 is a flowchart schematically showing an operation of a command-responsive vibration Bluetooth headset and a smart device game employing the same according to an embodiment of the present invention.
FIG. 2 is a block diagram illustrating the configuration of a vibration command and vibration pattern definition of a command-responsive vibration Bluetooth headset and a smart device game employing the same according to an embodiment of the present invention.
FIG. 3 is a block diagram illustrating specifically showing a method of defining the vibration pattern shown in FIG. 2.

### [Best Mode]

In a command-responsive vibration Bluetooth headset and a smart device game employing the same to which the technology of the present invention is applied, a Bluetooth headset 20 generates vibration in response to a vibration command 40 transmitted from various programs such as games executed in a smart device 10, so that auditory and tactile senses of a user are simultaneously stimulated when a particular action and the like is played, providing more realistic sensation in use.

To this end, according to the present invention, there is provided a command-responsive vibration Bluetooth headset 20 linked to a smart device 10 through a Bluetooth communication module to output a voice, the command-responsive vibration Bluetooth headset 20 including a vibration module installed in a main body of the Bluetooth headset 20, wherein the vibration module generates vibration if a signal of a vibration command 40 is received from a program executed in the smart device 10.

The smart device 10 includes a typical smart phone equipped with a Bluetooth communication module, a terminal device for executing a game, and a PC.

Bluetooth is the standard of short-range wireless technology for exchanging signals by allowing a source terminal such as notebook computers, PCs, and mobile phones including smart phones to interwork with a mobile device such as headsets. Since various technical details have been widely known about Bluetooth, a detailed description thereof will be omitted.

A vibration module (not shown) installed in the Bluetooth headset 20 generates vibration by allowing a vibration motor to vibrate in a vertical or horizontal direction according to an external signal input like a vibration module installed in a typical mobile phone and the like.

In the present invention, the vibration module is installed in the main body of the Bluetooth headset 20, and a vibration interface module is applied to a program source 30 to control the vibration module by a program executed in the smart device 10.

In a program executed in the smart device 10, for example, in the case of a game program, the vibration command 40 calls a vibration function in a particular situation in which a lively action is performed so as to allow the vibration module to generate the vibration when the vibration command 40 is transmitted to the Bluetooth headset 20.

Moreover, the vibration command 40 is transmitted to the Bluetooth headset 20 as a signal according to a vibration pattern 50 including an array of commands of vibration generation p and vibration pause s and defined in a program source 30 to operate the Bluetooth headset 20 in a vibration generation state or a vibration pause state.

In other words, various types of vibration patterns 50 are defined in the program source 30, and the vibration module of the Bluetooth headset 20 repeats vibration generation and vibration pause according to the vibration pattern 50 of the vibration function called by the vibration command 40.

Meanwhile, at least one vibration pattern 50 is created by variably defining a multiple of a minimum unit time for executing the commands of the vibration generation p and the vibration pause s, so that the vibration pattern 50 can be flexibly applied according to the configuration of the program.

In other words, it is possible to vary vibration duration and pause duration by variably applying a multiple based on a minimum unit time, other than simply repeating the vibration generation state and the vibration pause state. Thus, for example, in the case of a game program, a game developer may generate vibration having various forms and patterns according to a type of the played action, thereby inducing more lively play.

Although the minimum unit time for executing the commands of the vibration generation p and the vibration pause s is illustrated as 100 mSec in the embodiment of the present invention, it can be arbitrarily modified according to the configuration of the program.

### [Mode for Invention]

An operation process of the command-responsive vibration Bluetooth headset and the smart device game employing the same, which adopt the technology of the present invention and have the above-described configuration, will be described in more detail according to embodiments.

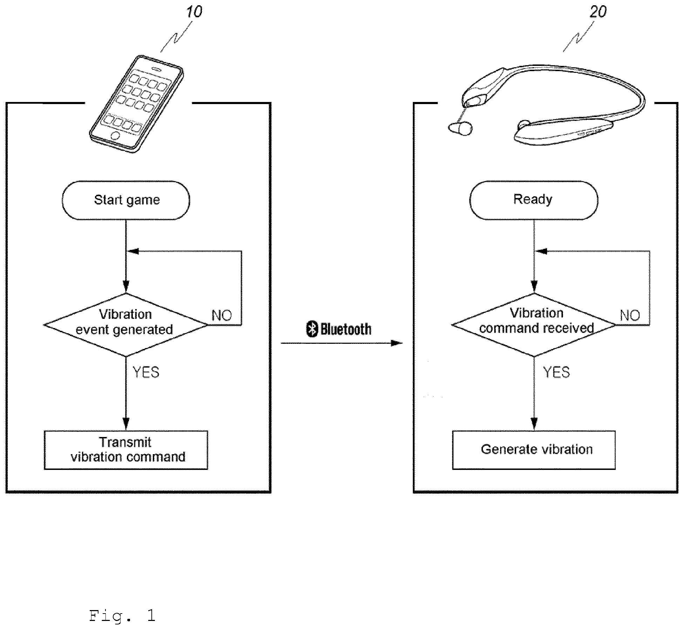

FIG. 1 is a flowchart schematically showing an operation flow until the command-responsive vibration Bluetooth headset of the present invention generates vibration. For example, in the case of executing a game program by using the smart device 10, when a user starts a game, the game program determines that a vibration event has occurred when a particular action such as a water drop burst, shooting, collision, or movement is played during the progress of the game and transmits the vibration command 40 to the Bluetooth headset 20 by using a Bluetooth function of the smart device 10.

In other words, the vibration command 40 is adopted in the program source 30 of the smart device game for operating a vibration module installed in a main body of the Bluetooth headset 20 to generate vibration by transmitting a signal of the vibration command 40 to the Bluetooth headset 20 when the vibration is required during the execution of the game.

The Bluetooth headset 20 outputs a voice included in the game program as in a typical headset in a ready (standby) state, and generates the vibration by applying the vibration command 40 to the vibration module installed in the main body as soon as the smart device 10 recognizes reception of the vibration command 40.

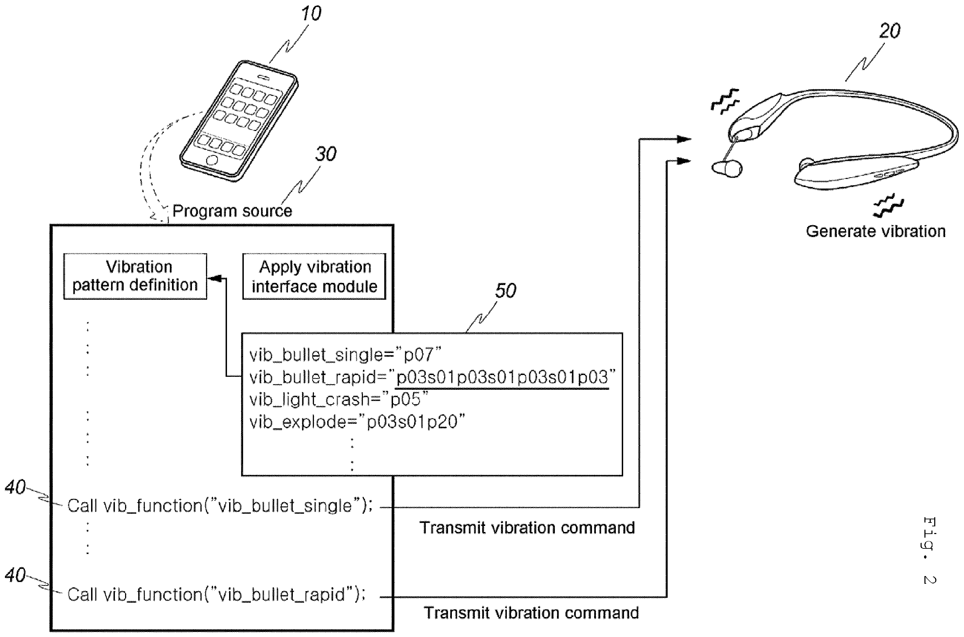

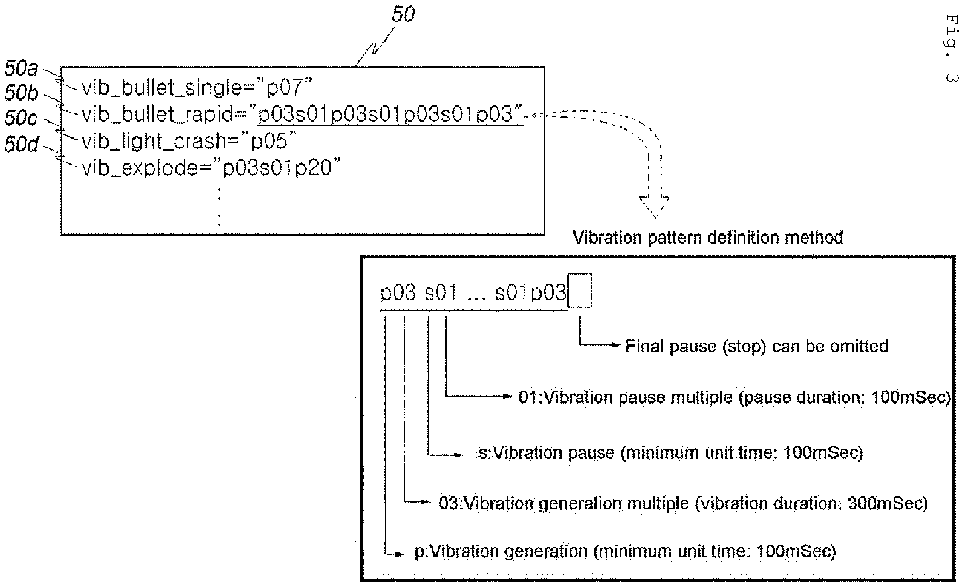

In more detail, as shown in FIGS. 2 and 3, the vibration command 40 is called and transmitted from the source 30 of the game program executed in the smart device 10 when a particular action, that is, various kinds of vibration events occur. In addition, each vibration pattern 50 having various forms according to the type of action is defined in the source 30 of the game program in advance.

Accordingly, when the vibration command 40 is called, the vibration command 40 is transmitted to the Bluetooth headset 20 so as to generate various types of vibration according to the vibration pattern 50 corresponding to a relevant action.

As described above, the vibration pattern 50 is arbitrarily defined in the program source 30 by the game developer for use according to the configuration of the program. In a preferred embodiment of the present invention, a method of defining the vibration pattern 50 is configured as follows.

In other words, the commands of the vibration generation p and the vibration pause s are separately arranged, such that a vibration generation multiple and a vibration pause multiple are arbitrarily set based on the minimum unit time for executing each command to vary the vibration duration and the pause duration, so that at least one vibration pattern 50a to 50d having various combinations can be defined.

For example, referring to a method of defining a vibration pattern 50b defined as 'vib_bullet_rapid' shown in FIG. 3, p03 signifies that a command of the vibration generation p has vibration generation duration of 300 mSec, which is three times the minimum unit time of 100 mSec, and s01 signifies that a command of the vibration pause s has vibration pause duration of 100 mSec, which is one time the minimum unit time of 100 mSec, so that the vibration pattern 50 is realized. In addition, the last command of the vibration pause s can be omitted.

Therefore, according to each vibration pattern 50 defined in the source 30 of the game program as described above, the user may sense the vibration differentiated according to the corresponding action through the vibration Bluetooth headset 20.

Therefore, the command-responsive vibration Bluetooth headset and the smart device game employing the same according to the present invention as described above allows a game user to perform more realistic and sensuous game play by simultaneously sensing the voice and the vibration by using the auditory and tactile senses, so that it is very effective in inducing interest of the user.

In particular, as described above, the vibration patterns 50, which are various combinations of the commands of the vibration generation p and the vibration pause s, can be defined according to the configuration of the program and used when the vibration command 40 is transmitted, so that it is possible to realize a vibration effect more effectively by variably creating the vibration through the Bluetooth headset according to a particular situation.

### [Industrial Applicability]

By applying the technology of the present invention, the vibration desired by the user can be set in the game program itself so as to operate the vibration Bluetooth headset, so that it can promote the interest to the game program. Accordingly, it is expected to further contribute to the development of game programs and related fields.

## Claims

1. A command-responsive vibration Bluetooth headset (20) linked to a smart device (10) through a Bluetooth communication module to output a voice, the command-responsive vibration Bluetooth headset (20) comprising a vibration module installed in a main body of the Bluetooth headset (20),
wherein the vibration module generates vibration if a signal of a vibration command (40) is received from a program executed in the smart device (10).

2. The command-responsive vibration Bluetooth headset (20) of claim 1, wherein the vibration command (40) is transmitted to the Bluetooth headset (20) as a signal according to a vibration pattern (50) including an array of commands of vibration generation (p) and vibration pause (s) and defined in a program source (30) to operate the Bluetooth headset (20) in a vibration generation state or a vibration pause state.

3. The command-responsive vibration Bluetooth headset (20) of claim 2, wherein at least one vibration pattern (50) is created by variably defining a multiple of a minimum unit time for executing the commands of the vibration generation (p) and the vibration pause (s).

4. A smart device game employing a command-responsive vibration Bluetooth headset (20), in which the smart device game is executed in a smart device (10) and associated with an operation of the Bluetooth headset (20) linked to the smart device (10) through a Bluetooth communication module to output a voice,
wherein a vibration command (40) is adopted in a program source (30) of the smart device game for operating a vibration module installed in a main body of the Bluetooth headset (20) to generate vibration by transmitting a signal of the vibration command (40) to the Bluetooth headset (20) when the vibration is required during the execution of the game.

5. The smart device game employing the command-responsive vibration Bluetooth headset (20) of claim 4, wherein the vibration command (40) is transmitted to the Bluetooth headset (20) as a signal according to a vibration pattern (50) including an array of commands of vibration generation (p) and vibration pause (s) and defined in a program source (30) to operate the Bluetooth headset (20) in a vibration generation state or a vibration pause state.

6. The smart device game employing the command-responsive vibration Bluetooth headset (20) of claim 5, wherein at least one vibration pattern (50) is created by variably defining a multiple of a minimum unit time for executing the commands of the vibration generation (p) and the vibration pause (s).
